(19) Europäisches Patentamt
European Patent Office
Office européen des brevets

(11) EP 1 727 296 A1

(12) **EUROPEAN PATENT APPLICATION**

(43) Date of publication:
29.11.2006 Bulletin 2006/48

(51) Int Cl.:
$H04B\ 7/005$ [(2006.01)]       $H04Q\ 7/36$ [(2006.01)]

(21) Application number: 05425353.9

(22) Date of filing: 23.05.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(71) Applicant: Siemens S.p.A.
20126 Milano (IT)

(72) Inventors:
• Annese, Pierfrancesco
24154 Fara Gera D'Adda (IT)
• Melotti, Patrizia
20146 Milano (IT)
• Manfredi, Giorgio
28100 Novara (IT)

(54) **Method and device for downlink resource allocation for packet transmission of users of radio communication systems**

(57) The method allocates a first and a second resource, in particular transmission power and spreading codes, for packet transmission from a base station (2) to pre-selected users (1a...1n) in a cell of a cellular communication system, preferably a wideband CDMA system supporting High-Speed Downlink Packet Access: The method initially determines, at predetermined time intervals, a time-variable metric for each user (22) and assigns a fraction of the available power, proportional to the metric, to each user (23). Then, the available codes are subdivided among the users (24), until all users have been configured or all available codes have been used. In the latter case, the metric computation (22), power assignment (23) and code subdivision (24) are repeated (26) for the subset of users that has been configured as a result of the first resource allocation cycle.

```
        ┌──────────────────┐
        │  Start (User     │──── 20
        │  Selection)      │
        └──────────────────┘
                │
        ┌──────────────────┐
        │   Set K̄ = K      │──── 21
        └──────────────────┘
                │
        ┌──────────────────┐
        │ Compute metric   │
        │ for each user    │──── 22
        └──────────────────┘
                │
┌──────────┐   ┌──────────────────┐
│ Set K̄ = k│   │ Allocate power   │
└──────────┘   │ to users         │──── 23
   26          │ according to     │
               │ metric           │
               └──────────────────┘
                │
        ┌──────────────────┐
        │ Allocate codes   │──── 24
        └──────────────────┘
                │
         ◇ Codes allocated
  YES    only to k users?  ──── 25
               │ NO
        ┌──────────────────┐
        │ Stop (Resources  │──── 27
        │ allocated)       │
        └──────────────────┘
```

FIG. 2

**Description**

Field of the invention

The present invention refers to packet transmission services in wireless communication systems, and more particularly it concerns a method of and device for downlink resource allocation to users of such services.
Preferably, but not exclusively, the invention is applied in the High-speed Downlink Packet Access (HSDPA) for Wideband Code Division Multiple Access (WCDMA) systems.

Background of the Invention

The dramatic increment of the demand by users of wireless communication systems for data services, like e-mail, file download, web browsing etc., has made necessary an adequate response by the operators and industry. Known high-data rate packet transmission systems, like cdma2000, IMT-2000, 1XEV-DO, allow attaining downward data rates of up to 2.5 Mb/s.
A new system, named High-Speed Downlink Packet Access (HSDPA) for Wideband Code Division Multiple Access (WCDMA), has been developed by 3GPP (3rd Generation Partnership Project) to support data communications characterised by lower real-time demands than telephony services, higher data rates and asymmetric traffic, i.e. higher traffic volume in downlink direction than in uplink direction, as is for instance the case of file download and web browsing. The technological enhancements incorporated by HSDPA not only provide a spectral efficiency gain, but also support user data rates up e.g. to 8 - 10 Mb/s, i. e. rates about 4 - 5 times higher than e. g. the IMT-2000 (International Mobile Telecommunications 2000) requirements.
The novel key features of HSDPA are included in 3GPP Release 5 Technical Specifications (TS). Reference can be made in particular to 3GPP TS 25.211 v5.5.0 (2004-06) "Physical channels and mapping of transport channels onto physical channels (FDD)", 3GPP TS 25.212 v5.5.0 (2004-03) "Multiplexing and channel coding (FDD)", 3GPP TS 25.214 v5.8.0 (2004-03) "Physical Layer Procedure (FDD)", 3GPP TS 25.306 v5.8.0 (2004-03) "UE Radio Access capabilities", and 3GPP TS 25.321 v5.5.0 (2003-06) "Medium Access Control (MAC) protocol specification".
HSDPA has the following purposes and properties:

-    Data transmission in downlink direction only, i.e. from the core network via the radio network control RNC to the subscriber;
-    Support of services from different QoS (Quality of Service) classes:

-    Background, e.g. file download, E-mail delivery, SMS, telematic services: lowest priority, low timing constraints, but preservation of payload contents (low bit error rate);
-    Interactive, e.g. web browsing, data base retrieval, server access, polling of measurement reports: higher traffic priority than background class traffic; end-to-end delay caused by HSDPA must be acceptable in a human- or machine-initiated request response pattern, i.e. it should not exceed a few seconds;
-    Streaming, e.g. video/audio streaming: guaranteed, but with variable bit rate; the transmission delay must not exceed a certain time (~ 250ms).

QoS class Conversational, comprising services like voice and video conferencing with strict real-time requirement, i.e. low transfer time and low delay jitter, is not supported.
The key idea of the HSDPA concept is to increase packet data throughput with methods as link adaptation and fast physical layer (L1) retransmission combining.
With HSDPA, two of the most fundamental features of WCDMA, variable Spreading Factor (SF) and fast power control, are disabled and replaced by means of adaptive modulation and coding (AMC), extensive multi-code operation and a fast and spectrally efficient retransmission strategy (Hybrid Automatic Repeat Request, HARQ).
Link adaptation function and AMC select a coding and modulation combination that requires higher SNR, which is available for the user close to the Node B (or with good interference/ channel conditions in short-term sense). To enable a large dynamic range of the HSDPA link adaptation and to maintain a good spectral efficiency, a user may simultaneously utilise up to 15 codes in parallel. The use of more robust coding, fast Hybrid Automatic Repeat Request and multi-code operation removes the need for variable SF.
The physical layer packet combining basically means that the terminal stores the received data packets in soft memory and, if decoding has failed, the new transmission is combined with the old one before channel decoding. The high data rate entails the need for a rapid scheduling process, in order to select the users that can receive packets at a given time and to allocate downlink resources (modulation and coding scheme, power, number of codes...) to each transmission. Rapid decisions allow the system to track the short-term variations of the channel conditions. That is why the scheduling process is performed in the base station (Node B).

Generally, in practical systems, user selection and resource allocation to the selected users are dealt with in separate steps (greedy algorithm), in order to reduce the computational complexity inherent in a joint process.

The present invention is concerned with resource allocation, in particular power and spreading codes in the preferred application, to the selected users.

The theoretical principles of dynamic resource allocation in a wireless communication channel are disclosed in "Optimal Resource Allocation for Fading Broadcast Channels-Part I: Ergodic Capacity," by L. Li and A.J. Goldsmith, IEEE Transactions on Information Theory, March 2001, Vol. 47, No. 3, pp. 1103-1127. The document is not specifically concerned with packet transmission. Moreover it separately considers time division, code division and frequency division on the communication channel, and therefore it does not provide useful information for a service like HSDPA, which combines code division multiple access with frequency or time division duplexing.

EP-A 1 424 865 discloses a method for dynamic resource allocation to packet communications in TD-SCDMA (time division - synchronous CDMA) systems, in which allocation of power and codes to a radio channel exploits the history of an interference-related parameter and hence a prediction of the future behaviour of the channel. The parameter being considered is the probability that, in a certain channel of a cell and at a certain measurement instant, the interference generated by other cells or frequencies is below a certain threshold. The known method is not directly applicable to HSDPA systems, since it does not consider variables like scheduling priority, BLER (Block Error Ratio) threshold for the Channel Quality Indicator (CQI), Queue, HARQ process. It also does not consider fairness in resource allocation and the effects of the resource management over cell throughput.

Thus, it is an object of the present invention to provide a resource allocation method and device that are specifically studied for HSDPA (and similar services) and that optimise the exploitation of a resource pool (power and codes) to be shared by a group of users, without sacrificing throughput and fairness.

Summary of the Invention

The invention provides, in a first aspect, a method comprising the steps of:

- calculating, for each user which can receive resources and at predetermined time intervals, a time-variable metric related with a transmission channel quality and/or a packet buffer occupancy;
- assigning to each user a fraction, proportional to the respective metric, of an available amount of a first transmission resource; and
- subdividing, among the users, an available amount of at least a second resource, by taking into account the assignment of the first resource to each user and the transmission channel quality and so as to maximise the transmission rate a user can receive, the subdividing proceeding until all pre-selected users have been provided with said second resource or the whole of the second resource has been used.

In a second aspect, there is provided a device for implementing the method, comprising:

- first processing and computing circuitry, arranged to receive at least from the users and from control units of buffers where queues of packets intended for each user are formed, information about the state of the transmission channel and about a packet buffer occupancy, and to calculate, for each user and at predetermined time intervals, a time-variable metric related with a transmission channel quality and/or the buffer occupancy;
- a calculating unit arranged to determine, based on said metric, a fraction of a first transmission resource to be assigned to each user; and
- second processing and computing circuitry arranged to subdivide at least a second resource either among the whole of the pre-selected users or, in case the second resource is not sufficient for all pre-selected users, among an initial subset of the pre-selected users, the second processing and computing circuitry operating by taking into account the assignment of the first resource to each user and the channel quality and so as to maximise the transmission rate a user can receive.

The invention also provides a base station in which resource allocation is performed by the above method and device.

Brief description of the drawings

Further objects, characteristics and advantages of the invention will become apparent from the following description of preferred embodiments, given by way of non-limiting example and illustrated in the accompanying drawings, in which:

- Fig. 1 is a schematic block diagram of a mobile communication system in which the invention is employed;
- Fig. 2 is a flow chart of the method of the invention;
- Fig. 3 is a flow chart of the power allocation;
- Fig. 4 is a flow chart of the code allocation;
- Fig. 5 is a block diagram of a scheduler implementing the method of the invention; and
- Fig. 6 is a block diagram of a metric calculator in the scheduler of Fig. 5.

Description of the preferred embodiments

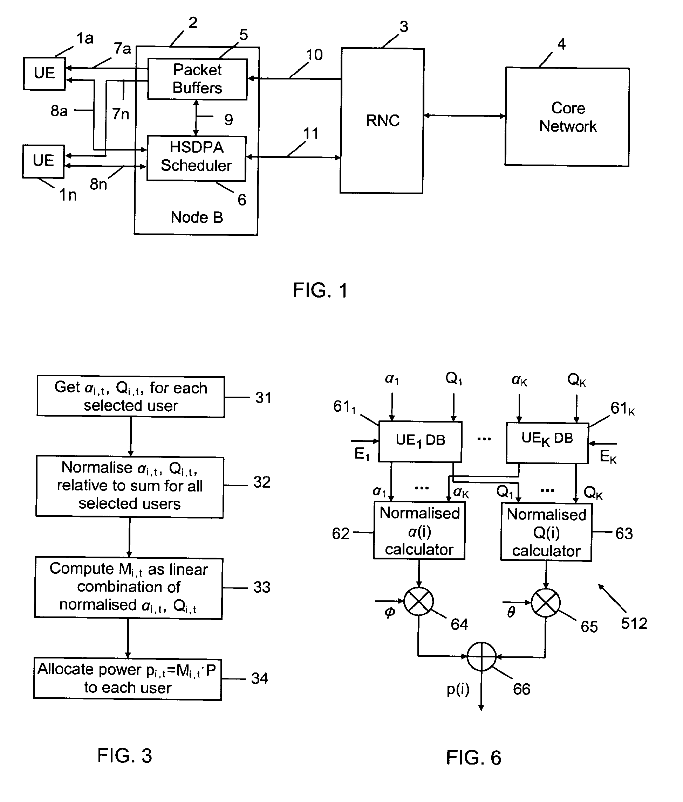

Referring to Fig. 1, there is schematically shown the architecture of a mobile communication system in which the invention is employed. A plurality of user's terminals 1a...1n in a cell have access to base station 2 (Node B in the 3rd generation terminology) controlled by a Radio Network Controller (RNC) 3, connected to core network 4. RNC 3 may control further Node Bs (not shown) besides the one denoted by reference numeral 2. Similarly, further Radio Network Controllers (not shown), each controlling one or more Node Bs, can be connected to core network 4.

Node B 2 comprises buffers 5 where the queues of HSDPA packets directed to the users are formed. Block 5 includes also the usual control units, arranged, inter alia, to detect the filling level of the buffers. Moreover, for allowing implementation of HSDPA, Node B also comprises a scheduler 6 selecting the users to which packets have to be transmitted and allocating downlink resources to such users.

Lines 7a...7n between buffers 5 and user terminals 1 a...1 n schematise the transport channel (known as HS-DSCH, High Speed Downlink Shared CHannel) carrying the user data to the terminals. Lines 8a...8n between scheduler 6 and user terminals 1a...1n represent the whole of the downlink and uplink control channels. Even if for sake of simplicity the drawing shows separate lines for each user, some of the control channels are shared among the users. Among said channels, an uplink dedicated control channel conveys feedback information (e.g. CQI (Channel Quality Indicator) reports, ACK/NACK (positive/negative acknowledgement signalling...) from each user terminal 1a...1n to scheduler 6. A shared downlink control channel conveys the parameters necessary for decoding the associated data channel 7 to the users. Connection 9 between buffers 5 and scheduler 6 conveys the buffer occupancy information to scheduler 6 and conveys the commands for packet transmission to the selected users to the buffers. Reference numerals 10, 11 represent the data and signalling paths between RNC and buffers 5 and scheduler 6, respectively.

Scheduler 6 has to select at predetermined instants, e. g. at each Time Transmission Interval TTI, a subset of K users among those having access to the service, and to determine transmission power $p_i$ (i = 1 ... K), number of codes $n_i$, modulation scheme $m_i$ and transport block size $TrBk_i$ (i.e. number of bits transmitted to a user within a time transmission interval TTI) for each selected user. Thus scheduler 6 has to find at each decision instant t, a set of parameters

$$\{i,\ n_i,\ p_i,\ m_i,\ TrBk_i\} \qquad\qquad (1)$$

that will reduce packet losses, maximise cell throughput and maintain fairness, taking into account both system-wide and individual resource constraints:

$$\left.\begin{aligned} &n_i \leq N_i \\ &\sum_i n_i = N \\ &\sum_i p_i = P \\ &TrBk_i = TrBk_{MAX,i} \end{aligned}\right\} \qquad\qquad (2)$$

where N and P are system constraints on the total number of spreading codes and the total power available for HSDPA service in the cell served by base station 2, $N_i$ is a per user constraint on the number of codes that can be assigned to the i-th user and $TrBk_{MAX,i}$ is the maximum number of bits of an HS-DSCH transport block received within a TTI. Both $N_i$ and $TrBk_{MAX,i}$ are assigned according to the user category.

The scheduling process is split into two parts (Greedy algorithm): first a scheduling order for the users is found (user selection) and then, given the scheduling order, a set of resources is allocated to the selected users so as to maximise the transmission rate the user can receive, by using power and codes that are available.

User selection is performed in any manner known in the art, for instance as disclosed in the paper "Fast Scheduling Policies using WCDMA High Speed Downlink Patent Access" by M. Boaretto et al., presented at the IEEE Vehicular Technology Conference Fall '03, Orlando, Oct. 2003. In practice, each user is allotted a weight depending on certain transmission parameters and the K users with the highest weights are selected, K being the number of users that can be served simultaneously.

Resource allocation is on the contrary the subject matter of the present invention.

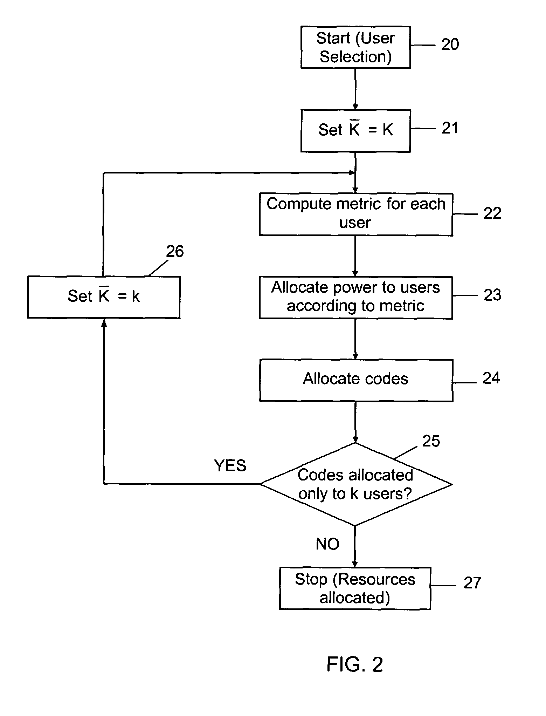

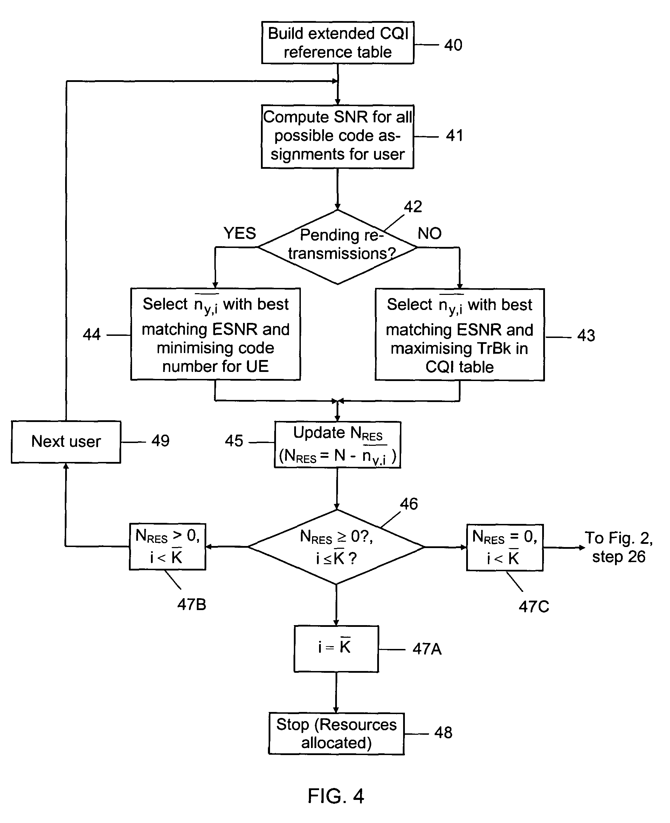

The invention proposes an iterative resource allocation method, based on splitting power allocation and code allocation. Reference is made to the flow chart in Fig. 2, where symbol $\overline{K}$ denotes the number of users to be processed during each cycle.

More particularly, after selection of the K users (start, step 20), $\overline{K}$ is set to K (set 21), and the power fraction to be allocated to each of the K users is determined (metric computation and power allocation, steps 22, 23). Then the codes are allocated (step 24), until either all codes have been used or all K users have received codes. If the available codes are all used for a subset k < K users (output YES of step 25), the power and code allocation steps are repeated only for those k users (as indicated by step 26). Otherwise (output NO of step 25) resource allocation has been completed and the process stops (step 27).

The iteration performed in case only a subset of the selected users has been provided with codes allows optimising the exploitation of the available resources, in terms of both power and codes, as will be better explained below.

The different steps of the method of the invention will now be discussed in more detail.

The metric adopted according to the invention for dividing the available power among the K pre-selected users is given, for each selected user and each TTI, by:

$$M_{i,t} \triangleq \varphi \cdot \frac{\alpha_{i,t}}{\sum_{i=1}^{K} \alpha_{i,t}} + \vartheta \cdot \frac{Q_{i,t}}{\sum_{i=1}^{K} Q_{i,t}} \tag{3}$$

with $\sum_{i=1}^{K} M_{i,t} = 1$ and $\phi + \theta = 1$.

In equation (3):

- $\alpha_{i,t}$ is the fading prediction for the i-th user at time t, obtained from the Channel Quality Indicator (CQI) reported from mobile terminals 1a...1n; for instance, $\alpha_{i,t}$ is obtained by means of a second order linear predictor based on the last two values of CQI; and
- $Q_{i,t}$ is defined as:

$$Q_{i,t} = \max_{j} \{q_{i,t}(j) \cdot \pi_i(j)\} \qquad j = 1 \dots L_i(t) \tag{4}$$

where $q_{i,t}(j)$ is the j-th queue size at time t, $\pi_i(j)$ is the scheduling priority related to $q_{i,t}(j)$ and $L_i(t)$ is the number of priority queues for the i-th user;

The normalisation represented by the division of $\alpha_{i,t}$ and $Q_{i,t}$ by the sum of the respective values for all pre-selected users makes the different quantities comparable.

Note that according to 3GPP specifications, CQI may not be reported every TTI, but with longer periodicity, so that a same value of $\alpha_{i,t}$ can be used for several consecutive TTIs.

Denoting by P the maximum available power for HS-DSCH transmission, the transmission power for the i-th user can thus be expressed as:

$$p_{i,t} = M_{i,t} \cdot P \tag{5}$$

Factors $\phi$, $\theta$ can be adjusted between 0 and 1, while keeping their sum equal to 1, to orient metric $M_{i,t}$ towards maximum throughput ($\phi = 1$) or maximum throughput fairness ($\theta = 1$). Quantity $\alpha_{i,t}$ tends to favour users with the best channel condition, resulting in a degree of unfairness of the chosen allocation policy, while $Q_{i,t}$ tends to favour users with a great amount of data in their queues due to the fact that they have not been served in the past times because of the deep fading condition they experienced, and thus contributes to fairness among users.

The power allocation is disclosed also in the flow chart of Fig. 3, where steps 31 to 33 illustrate the determination of metric $M_{i,t}$ as the linear combination of normalised quantities $\alpha_{i,t}$, $Q_{i,t}$, and step 34 is the determination of power $p_{i,t}$ for the user being considered, based on the respective metric $M_{i,t}$.

After power allocation, the code allocation is then performed by taking each pre-selected user in order, for instance in descending order of the weight determined in the user selection step, and by choosing for each user a number of codes that maximise the transmission rate the user can receive. Reference will also be made to the flow chart of Fig. 4. As in Fig. 2, $\overline{K}$ denotes the number of users to be processed in the cycle, i.e. K at the first execution and k at the iteration.

The code allocation exploits the so-called CQI reference table, i. e. the table that, for each value of the CQI index, specifies the transport block size, the number of codes and the modulation scheme out of a set of reference ones that the UE is capable of supporting with a detection error not higher than 10% in the first transmission for a reference HS-PDSCH power. According to the invention, however, the CQI reference table - that conventionally would set a one-to-one correspondence between a CQI index, on the one side, and a transport block size TrBk, a number n of codes (i.e. channels) and a modulation scheme m to be utilised for a first transmission, on the other side - is not used as such, but it is extended so as to offer different sets of codes and modulations for each CQI index, and hence for each transport block size. Indeed, taking into account that the information carried by CQI is a rather coarse sampling of the channel state (CQI can take only 30 values according to the present 3GPP specifications), the standard reference table would result in a limited flexibility in the choice of the transmission parameters for each first transmission. On the contrary, by using the extended table, a best resource allocation can be performed: e.g. increasing power to choose an higher order modulation allows reducing the number of codes used for the same transport block size, thus leaving codes available for other scheduled users.

For building the extended table, a target SNR ($TSNR_i$) corresponding to each set of transport block size, number of codes and modulation scheme reported in the UE's standard CQI table, is found by link simulations made with the assumption of an additive white Gaussian noise channel. Power $Pow_i$ necessary to obtain $TSNR_i$ is also determined according to relation:

$$Pow_i = SNR_{target,i} - 10log(n_i) - \Delta_i + N_0 \qquad (6)$$

where $\Delta_i$ is a power adjustment parameter defined in 3GPP TS 25.214 and No is the receiver thermal/electronic noise. The pair $TSNR_i$ and $Pow_i$ is then included in the CQI reference table field for each value of the CQI index, along with $TrBk_i$, $n_i$ and $m_i$.

At this point, we exploit the fact that, according to 3GPP TS 25.321, a same transport block can be mapped onto a different number of codes or, for a given number of codes, either QPSK or 16 QAM modulation can be used. Therefore, an extended CQI field is defined in which the CQI index is in one-to-one correspondence only with the transport block size $TrBk_i$. For each $TrBk_i$, and for each number of physical channels ($n_i$) and each modulation ($m_i$) on which $TrBk_i$ can be mapped, an enhanced target SNR, ESNR, is derived from TSNR in the following way:

- if a number of codes other than the one in CQI Reference Table can be assigned to the current TrBk, we take into account the gain/loss $\Delta_{RM}$, in terms of SNR, due to a different rate matching, by using a puncturing process performed by evaluating the correct decoding thresholds as the puncturing rate changes;
- if other modulation schemes are possible, we consider a loss $\Delta_{MOD}$, in terms of SNR, when changing from QPSK to 16 QAM modulation.

Thus, ESNR for the i-th user can be written

$$ESNR_i = TSNR_i + \Delta_{RM} + \Delta_{MOD} \qquad (7)$$

By applying the rules set forth above, the Extended CQI Reference Table field can be represented as follows:

$$CQI_i = \begin{cases} TrBk_i & TrBk_i & \dots & TrBk_i \\ n_{i,1} & n_{i,2} & & n_{i,x} \\ m_{i,1} & m_{i,2} & & m_{i,x} \\ ESNR_{i,1} & ESNR_{i,2} & & ESNR_{i,x} \\ Pow_{i,1} & Pow_{i,2} & \dots & Pow_{i,x} \end{cases} \qquad (8)$$

where each $n_{i,h}$ (h = 1...x) represents one of the possible numbers of codes assigned to a given Transport Block Size, and $m_{i,h}$, $ESNR_{i,h}$, $Pow_{i,h}$ are the modulation scheme, the target SNR and Power associated to each set of TrBk; and an $n_{i,h}$.

The building of the extended CQI table is shown in the whole at step 40 in Fig. 4. After having built the extended table field (8), the actual allocation of the codes by scheduler 6 proceeds as follows.

Let N be the total number of spreading codes and $n_{y,i}$ be the number of physical channels assigned to the i-th user. Starting from the first of the K pre-selected users, at step 41 the SNR values, at the receiver side, corresponding to a different number of possible code assignments are determined according to relation:

$$SNR(n_{y,i}) = p_{i,t} - \alpha_{i,t} - 10 \log(n_{y,i}) \qquad (9)$$

In relation (9), $n_{y,i}$ = 1, 2...$N_{y,i}$, with $N_{y,i}$ = min ($N_{RES}$, $N_i$), where $N_{RES}$ is the residual number of codes after code allocation to the previous user considered in the allocation cycle and $N_i$ is the number of codes that can be assigned to the i-th user. Note that $p_{i,t}$ is expressed in dBm, $\alpha_{i,t}$ and $SNR(n_{y,i})$ in dB.

If the UE being processed has no pending retransmission (output NO of step 42), the target SNR, $ESNR(n_{y,i})$, reported in UE's Extended CQI table, is compared with $SNR(n_{y,i})$ defined in (9) for each value of $n_{y,i}$. Eventually, we choose the $\overline{n_{y,i}}$ for which $SNR(n_{y,i})$ is closer to $ESNR(n_{y,i})$ and which maximises the Transport Block Size that the UE can receive (step 43).

If a UE needs retransmission (output YES of step 42), the Transport Block Size is fixed, so we choose the $\overline{n_{y,i}}$ that minimises the number of codes allocated for this UE and for which $SNR(n_{y,i})$ is closer to $ESNR(n_{y,i})$ (step 44).

After that, the residual number of codes $N_{RES}$ is updated (step 45), and at step 46 it is checked whether all available codes have been assigned ($N_{RES}$ = 0) or all pre-selected users have been configured for transmission (i = $\overline{K}$), that is they have been assigned both power and codes. If all users have been configured (i = K, comparison output step 47A), the operations end (step 48), irrespective of the value of $N_{RES}$. If neither condition occurs ($N_{RES}$ > 0 and i < $\overline{K}$, step 47B), the process is repeated for the next user (step 49). Lastly, if all available codes have been assigned ($N_{RES}$ = 0) but only part of the pre-selected users has been configured ($N_{RES}$ = 0 and i < K, step 47B), the process goes to step 26 (Fig. 2) for the iteration of the allocation procedure.

Given the transport block size and the number of physical channels (i.e. of spreading codes) allotted to the user, the modulation scheme to be used is automatically determined from the extended CQI reference table field (8).

If all spreading codes are assigned only to a subset k of the K pre-selected users, the algorithm disclosed hereinbefore is sub-optimal in respect of power allocation, because the power which should have to be allotted to users k+1...K remains unused. In other words, if only k users are configured, there is a power waste given by

$$P_{wasted} = \sum_{i=k+1}^{K} p_{i,t} \qquad (10)$$

which leads to a lessening of the Maximum Cell Throughput.

To avoid this power waste, the available power P is re-allocated only to the k users configured as a result of the first power and code allocation steps. Re-allocation takes place as disclosed above, yet by using now a metric:

$$M_{R_{i,t}} = \varphi \frac{\alpha_{i,t}}{\sum_{i=1}^{k} \alpha_{i,t}} + \vartheta \frac{Q_{i,t}}{\sum_{i=1}^{k} Q_{i,t}} \qquad k < K; \quad \varphi + \theta = 1 \qquad (11)$$

where all quantities have the same meaning as in equation (3).

The transmission power for the i-th user is now:

$$p_{R_{i,t}} = M_{R_{i,t}} \cdot P \qquad (12)$$

Power re-allocation eliminates the waste of the power resource, however it gives rise to a code waste. In fact, after power re-allocation, power $p_{R_{i,t}}$ allotted to the i-th user according to (6) is larger than power $p_{i,t}$ determined by equation (5). As known, this increase of available power for the i-th user might lead to the choice of an higher modulation and coding scheme, with a consequent reduction of the number of channels employed. To eliminate the code waste, according to the invention, also a re-allocation of the codes is performed after power re-allocation, by the same procedure as before and using now power $p_{R_{i,t}}$ for the SNR calculations of equation (9). In this way, also power allocation is optimised.

A scheduled (i.e., pre-selected) user that will be served is thus represented by the following parameters:

$$UE_i = \begin{cases} p_{R_{i,t}} \\ n_{R_{i,t}} \\ TrBk_i \end{cases} \qquad (13)$$

where $p_{R_{i,t}}$ is the transmission power, $\overline{n_{R_{i,t}}}$ is the number of physical channels and $TrBk_i$ is the Transport Block Size assigned to the i-th user for next transmission.

The iterative resource allocation process has three main benefits:

- there is no waste of power, contrary to the separate power and code allocation without iteration;
- there is an improvement in the code assignment;
- the maximum transport block size compatible with the assigned resources is selected, so that the user throughput is improved.

Tests have shown that, by the single-cycle process, only about 85% of the total power and 90% of the available codes are exploited in the average, whereas at the end of the iteration substantially no power waste occurs and a mean of 95% of the available codes have been assigned.

Moreover, the metric used for allocating the power takes into account the queue, fairness and scheduling priority issues. Use of the CQI information in both the power and the code allocation takes into account the BLER, to which CQI is related. The HARQ processes are implicitly taken into account by the scheduler, in that in HSDPA the transmission of a packet is always associated with a certain HARQ process.

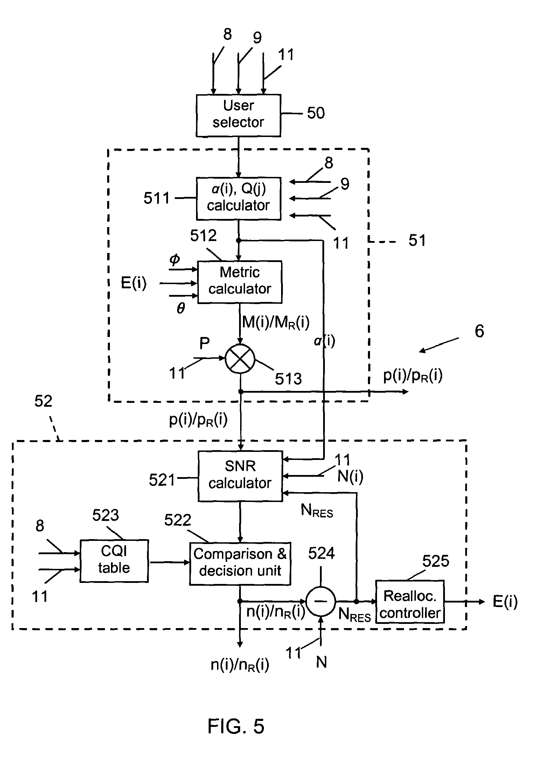

Fig. 5 shows an embodiment of scheduler 6. For sake of simplicity of the drawing, the inputs providing some circuit blocks with information coming from the different users 1 a...1 n are represented together by a single arrow 8. For user-dependent quantities (like $\alpha$, Q, M etc.), user dependency is indicated by symbol "i" in parentheses. Still for sake of simplicity, no timing signal is shown.

The scheduler includes a user selector 50, a power allocating unit 51 and a code-allocating unit 52.

User selector 50, in the most general case, will operate based on information coming from user terminals 1a... 1n, the buffer control units and RNC 3, as denoted by inputs 8, 9, 11. It is not part of the invention and thus it is not disclosed in detail.

In power allocating unit 51, the first block 511 ($\alpha$, Q calculator) is a processing and computing unit that calculates parameters $\alpha$ and Q for the K users selected by selector 50, generally by exploiting information from user terminals 1a... 1n, the buffer control units and RNC.

Parameters $\alpha$ and Q computed by unit 511 are fed to a second processing and computing unit 512 (metric calculator) calculating metric M or metric $M_R$, as the case may be. When the iteration of the power allocation process is required, metric calculator 512 also receives signals E(i) provided by code allocating unit 52 and enabling metric calculator 512 to process again parameters $\alpha$ and Q of the k users concerned by the iteration. An embodiment of unit 512 will be disclosed with reference to Fig. 6.

The output of metric calculator 512 is connected to multiplying unit 513 that receives, e. g. from RNC, the value of the overall power P and multiplies such power by metric M ($M_R$). The output of multiplying unit 513 thus conveys the information about the power fraction p ($p_R$) to be allocated to each user. Values p ($p_R$) are then fed to packet transmission control units for correspondingly organising transmission towards the concerned users.

In code allocating unit 52, a third processing and computing unit 521 receives the power values calculated by multiplying unit 513, as well as the fading values, the residual code number $N_{RES}$ and the maximum number of codes $N_i$ that can be assigned to each user, and calculates the signal-to-noise ratio of equation (9) for all possible code assignments to each user.

A comparison and decision unit 522 receives the SNR values from unit 521 and compares them with the ESNRs stored in the CQI extended reference table, built by and stored in a fourth processing and computing unit 523 to which unit 522 has access. Based upon the results of the comparisons, unit 522 determines the code assignment $\bar{n}$ ($\bar{n}_R$). Also values $\bar{n}$ ($\bar{n}_R$) are then fed to the packet transmission control units.

The number $\bar{n}$ ($\bar{n}_R$) of codes to be assigned to the user is also fed to a subtracting unit 524 computing value $N_{RES}$ fed back to SNR calculator 521. Value $N_{RES}$ is also fed to a reallocation controller 525 that generate signals E(i) when $N_{RES}$ becomes 0 before all users have been processed in code allocating unit 52.

Referring to Fig. 6, metric calculator 512 comprises memory units $61_1...61_K$ associated with a respective pre-selected user $UE_1...UE_K$ and storing parameters $\alpha$ and Q calculated by unit 511 (Fig. 5) for the respective user. Reading of memory units $61_1...61_K$ is controlled also by enabling signals E(i) (here separately indicated as $E_1...E_K$) provided by reallocation controller 525 when the allocation process is to be iterated, in such a manner that the parameters of the first k users are read again within the same TTI. For instance, signals E(i) include a pattern of bits having a first logic value when the corresponding register is to be read, and a second value if the register is not to be read. Memory units $61_1...61_K$ are connected with units 62, 63 (each consisting in practice in an accumulator and a dividing circuitry) calculating the normalised parameters $\alpha_{i,t}/\sum_{i=1}^{C}\alpha_{i,t}$ and $Q_{i,t}/\sum_{i=1}^{C}Q_{i,t}$ (where C = k or K) for the different users. The normalised parameters of the individual users are fed by units 62, 63 to multipliers 64 and 65, where such parameters are multiplied by combination factors $\phi$ and $\theta$. The outputs of multipliers 64 and 65 are connected to an adder 66 summing together the products computed by the multipliers to give metric M or ($M_R$).

Of course, all of the circuitry shown in Fig. 5 and 6 can be implemented by the processing devices provided in base stations of mobile communication systems.

It is evident that the above description has been given by way of non-limiting example and that changes and modifications are possible without departing from the scope of the invention. In particular, even if power and codes have been disclosed, the invention can be used for allocating any resource (e. g. frequencies, time slots, ...) that is to be shared among a group of users, and for allocating more than two resources. Moreover, even if the invention has been discussed in detail with reference to HSDPA, it can be used also in other systems, like the one known as WiMAX (World Interoperability for Microwave Access), which is a wireless technology disclosed in particular in IEEE 802.16 range of standards.

## Claims

1. A method of allocating transmission resources for downlink packet transmission, over a wireless transmission channel, to pre-selected users (1a...1n) of a wireless communication system, **characterised in that** the method comprises:

    - calculating (22), for each pre-selected user and at predetermined time intervals, a time-variable metric related with a transmission channel quality and/or a packet buffer occupancy;
    - assigning (23) to each pre-selected user a fraction, proportional to the respective metric, of an available amount of a first transmission resource; and
    - subdividing (24), among the pre-selected users, an available amount of at least a second resource, by taking into account the assignment of the first resource to each user and the transmission channel quality and so as to maximise the transmission rate a user can receive, the subdivision proceeding until all pre-selected users have been provided with said second resource or the whole of the second resource has been used.

**2.** The method as claimed in claim 1, **characterised in that**, if the whole of the available second resource has been subdivided among a subset only of the pre-selected users, said steps of assigning and subdividing (23, 24) are repeated for the users in the subset.

**3.** The method as claimed in claim 1 or 2, **characterised in that** said metric is calculated as a linear combination, with combination factors that are adjustable between 0 and 1 and have a unit sum, of parameters representative of the transmission channel quality and the buffer occupancy.

**4.** The method as claimed in any preceding claim, **characterised in that** said first resource is a transmission power.

**5.** The method as claimed in claim 4, **characterised in that** said parameter representative of the transmission channel quality is a normalised value of an estimated channel fading ($\alpha_{i,t}$), and said parameter representative of the buffer occupancy is a normalised value of the maximum ($Q_{i,t}$) among all queue sizes, weighted by a respective scheduling priority, for the concerned user.

**6.** The method as claimed in claim 5, **characterised in that** said estimated fading ($\alpha_{i,t}$) is predicted from a channel quality information reported by the users (1a...1n).

**7.** The method as claimed in any preceding claim, **characterised in that** said second resource is a set of channels.

**8.** The method as claimed in claim 7, **characterised in that** said cellular communication system is a CDMA communication system, and said second resource is a set of spreading codes.

**9.** The method as claimed in claim 8, **characterised in that** the packet transmission is a transmission organised according to the High-speed Downlink Packet Access for Wideband Code Division Multiple Access standards.

**10.** The method as claimed in any of claims 4 to 9, **characterised in that** said subdividing step (24) includes:

- building (40), for each of a plurality of discrete values taken by the channel quality information, a table reporting at least: an admitted size of data blocks transported during a considered interval with that channel quality; numbers of codes and modulation schemes admitted for that data block size; and a target signal to-noise ratio for each combination of the data block size with a number of codes and a modulation scheme;
- determining (41) a signal-to-noise ratio at a user's terminal for all possible code assignments to the concerned user, based on the transmission power assigned to the user by the power assigning step (23) and the estimated fading;
- identifying (43, 44) in said table the target signal-to-noise ratio best matching the computed signal-to-noise ratio; and
- choosing (43, 44), for the actual code assignment to the user, the number of codes corresponding to said best matching target signal-to-noise ratio.

**11.** The method as claimed in claim 10, **characterised in that** the user has no pending retransmission and said number of codes is the one maximising the admitted size of the data blocks.

**12.** The method as claimed in claim 10, **characterised in that** the user has pending retransmissions and said number of codes is the one minimising the overall number of codes assigned to the user.

**13.** The method as claimed in any of claims 10 to 12, **characterised in that** said building step (40) includes:

- associating, with each discrete value of the channel quality information, the corresponding admitted data block size, a pre-determined value of the number of codes and a pre-determined modulation scheme;
- calculating a preliminary target signal-to-noise ratio attainable with said data block size, the pre-determined value of the number of codes and the pre-determined modulation scheme;
- associating, with each pair of a discrete value of the channel quality information and the corresponding data block size, further numbers of codes and modulation schemes, if any, admitted for that data block size;
- determining, if numbers of codes and modulation schemes other than the predetermined ones exist, a first and respectively a second correction factor for the signal-to-noise ratio; and
- calculating the target signal-to-noise ratio, for each set of a data block size, a number of codes and a modulation scheme, by algebraically adding said correction factors to said pre-determined target signal-to-noise ratio.

**14.** A device for allocating transmission resources for downlink packet transmission over a wireless transmission channel to a pre-selected set of users (1a...1n) of a wireless communication system, the device (51, 52) being located in a control unit of the system (2) downstream of a user selection unit (50) creating, at pre-determined time intervals, said pre-selected set of users, the device (51, 52) being **characterised in that** it comprises:

- first processing and computing circuitry (511, 512), arranged to receive at least from the users (1a...1n) and from control units of buffers (5) where queues of packets intended for each user are formed, information about the state of the transmission channel and about a packet buffer occupancy, and to calculate, for each pre-selected user and at each time interval, a time-variable metric related with a transmission channel quality and/or the buffer occupancy;
- a calculating unit (513) arranged to determine, based on said metric, a fraction of a first transmission resource to be assigned to each user; and
- second processing and computing circuitry (52) arranged to subdivide at least a second resource either among the whole of the pre-selected users or, in case the available second resource is not sufficient for all pre-selected users, among a subset of the pre-selected users, the second processing and computing circuitry (52) operating by taking into account the assignment of the first resource to each user and the channel quality and so as to maximise the transmission rate a user can receive.

**15.** The device according to claim 14, **characterised in that** the second processing and computing circuitry (52), when using the available amount of the second resource for the subset only of the pre-selected users, is arranged to control the first processing and computing circuitry (51, 52) and the calculating unit (53) so that they repeat the determination of the first resource fraction only for the users in the subset.

**16.** The device according to claim 15, **characterised in that** said second processing and computing units (54, 55, 56) are arranged to subdivide again the second resource among the users in the subset, in order to take into account the new determination of the first resource fraction for the users in the subset.

**17.** The device as claimed in any of claims 14 to 16, **characterised in that** said first processing and computing units (51, 52) are arranged to compute the metric as a linear combination, with combination factors that are adjustable between 0 and 1 and have a unit sum, of parameters representative of the transmission channel quality and the buffer occupancy.

**18.** The device as claimed in any of claims 14 to 17, **characterised in that** said first processing and computing units (51, 52) are arranged to compute a normalised value of the maximum ($Q_{i,t}$) among all queue sizes, weighted by a respective scheduling priority, for the concerned user, the normalised maximum weighted queue size being the parameter representative of the buffer occupancy.

**19.** The device according to any of claims 14 to 18, **characterised in that** the first resource is a transmission power.

**20.** The device as claimed in claim 19, **characterised in that** said first processing and computing units (511, 512) are arranged to receive a channel quality information reported by the users (1a...1n) and to compute therefrom a normalised value of an estimated channel fading ($\alpha_{i,t}$) as said parameter representative of the transmission channel quality.

**21.** The device as claimed in any of claims 14 to 20, **characterised in that** the second resource is a set of channels.

**22.** The device as claimed in claim 21, **characterised in that** said communication system is a CDMA communication system, and said second resource is a set of spreading codes.

**23.** The device as claimed in claim 22, **characterised in that** the packet transmission is a transmission relevant to the High-speed Downlink Packet Access for a Wideband Code Division Multiple Access wireless communication system.

**24.** The device as claimed in any of claims 14 and 19 to 23, **characterised in that** said second processing and computing circuitry (52) comprise:

- a signal-to-noise ratio calculating unit (521), connected to the output of said calculating unit (513), and arranged to calculate, from the power fraction and from the estimating fading calculated for each user, a value of the signal-to-noise ratio for each possible code assignment to a concerned user;

- a third computing and processing circuitry (523) arranged to receive a channel quality information reported by the users (1a...1n), and to build and store, for each of a plurality of discrete values taken by the channel quality information, a table reporting at least: an admitted size of data blocks transported during a considered interval with that channel quality; numbers of codes and modulation schemes admitted for that data block size; and a target signal to-noise ratio for each combination of the data block size with a number of codes and a modulation scheme;

- a comparison unit (522), arranged to compare the computed value of the signal-to-noise ratio with each value of said target signal-to-noise ratio in said table and to identify the target signal-to-noise ratio best matching the computed signal-to-noise ratio; and

- a decision unit (522), arranged to choose; for code assignment to the user, the number of codes corresponding to said best matching target signal-to-noise ratio.

25. A base station (2) of a wireless communication system, **characterised in that** allocation of resources to the users (1a...1n) for downlink packet transmission is performed by a method as claimed in any of claims 1 to 13 and by a device as claimed in any of claims 14 to 24.

FIG. 1

FIG. 3

FIG. 6

Start (User Selection) — 20

Set $\bar{K} = K$ — 21

Compute metric for each user — 22

26

Set $\bar{K} = k$

Allocate power to users according to metric — 23

Allocate codes — 24

25

YES

Codes allocated only to k users?

NO

Stop (Resources allocated) — 27

FIG. 2

```
                      ┌─────────────────┐
                      │ Build extended CQI │── 40
                      │  reference table  │
                      └─────────────────┘
                               │
                               ▼
                      ┌─────────────────┐
                      │ Compute SNR for all │
                      │ possible code as- │── 41
                      │ signments for user │
                      └─────────────────┘
                               │
                               ▼
                            42
           YES      ◇ Pending re-  ◇     NO
          ◄─────────  transmissions?  ─────────►
```

$$N_{RES} = N - \overline{n_{y,i}}$$

Select $\overline{n_{y,i}}$ with best matching ESNR and minimising code number for UE — 44

Select $\overline{n_{y,i}}$ with best matching ESNR and maximising TrBk in CQI table — 43

Next user — 49

45 — Update $N_{RES}$ ($N_{RES} = N - \overline{n_{y,i}}$)

46

$N_{RES} > 0$, $i < \overline{K}$ — 47B

$N_{RES} \geq 0$?, $i \leq \overline{K}$ ?

$N_{RES} = 0$, $i < \overline{K}$ — 47C

To Fig. 2, step 26

$i = \overline{K}$ — 47A

Stop (Resources allocated) — 48

FIG. 4

FIG. 5

**European Patent Office**

## EUROPEAN SEARCH REPORT

Application Number

EP 05 42 5353

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 104 933 A (FRODIGH ET AL) 15 August 2000 (2000-08-15) * column 3, line 55 - column 4, line 34 * * column 5, line 56 - column 6, line 52 * * figure 7 * ----- | 1,14,25 | H04B7/005 H04Q7/36 |
| A | US 6 542 484 B1 (OVESJOE FREDRIK ET AL) 1 April 2003 (2003-04-01) * abstract * * column 8, lines 43-46 * ----- | 1,14,25 | |
| A | WO 03/107707 A (NOKIA CORPORATION; PEDERSEN, KLAUS, INGEMANN; WIGARD, JEROEN; MOGENSEN) 24 December 2003 (2003-12-24) * page 4, line 3 - page 5, line 19 * * page 7, line 18 - page 11, line 22 * * figures 2-4 * ----- | 1,14,25 | |
| | | | **TECHNICAL FIELDS SEARCHED (Int.Cl.7)** H04B H04Q |

The present search report has been drawn up for all claims

| Place of search | Date of completion of the search | Examiner |
|---|---|---|
| The Hague | 21 October 2005 | Yang, Y |

EPO FORM 1503 03.82 (P04C01)

**EP 1 727 296 A1**

**ANNEX TO THE EUROPEAN SEARCH REPORT
ON EUROPEAN PATENT APPLICATION NO.**                    EP 05 42 5353

This annex lists the patent family members relating to the patent documents cited in  the above-mentioned European search report.
The members are as contained in the European Patent Office EDP file on
The European Patent Office is in no way  liable for these particulars which are merely  given for the purpose of information.

21-10-2005

| Patent document cited in search report | | Publication date | Patent family member(s) | | Publication date |
|---|---|---|---|---|---|
| US 6104933 | A | 15-08-2000 | AU | 7948898 A | 04-01-1999 |
| | | | CA | 2295085 A1 | 30-12-1998 |
| | | | EP | 0997008 A2 | 03-05-2000 |
| | | | JP | 2002505819 T | 19-02-2002 |
| | | | WO | 9859433 A2 | 30-12-1998 |
| | | | TW | 387176 B | 11-04-2000 |
| US 6542484 | B1 | 01-04-2003 | AU | 762947 B2 | 10-07-2003 |
| | | | AU | 4538499 A | 06-12-1999 |
| | | | CA | 2328469 A1 | 25-11-1999 |
| | | | CN | 1308824 A | 15-08-2001 |
| | | | DE | 69926363 D1 | 01-09-2005 |
| | | | EP | 1078543 A1 | 28-02-2001 |
| | | | JP | 2002516550 T | 04-06-2002 |
| | | | WO | 9960809 A1 | 25-11-1999 |
| | | | TW | 420962 B | 01-02-2001 |
| WO 03107707 | A | 24-12-2003 | AU | 2002258112 A1 | 31-12-2003 |
| | | | EP | 1512304 A1 | 09-03-2005 |

EPO FORM P0459

For more details about this annex : see Official Journal of the European Patent Office, No. 12/82

## REFERENCES CITED IN THE DESCRIPTION

**Patent documents cited in the description**

- EP 1424865 A

**Non-patent literature cited in the description**

- **L. LI ; A.J. GOLDSMITH.** Optimal Resource Allocation for Fading Broadcast Channels-Part I: Ergodic Capacity. *IEEE Transactions on Information Theory,* March 2001, vol. 47 (3), 1103-1127

- **M. BOARETTO et al.** Fast Scheduling Policies using WCDMA High Speed Downlink Patent Access. *IEEE Vehicular Technology Conference Fall '03,* October 2003